# EUROPÄISCHE PATENTSCHRIFT

(11) **EP 4 528 323 B1**
(45) Veröffentlichungstag und Bekanntmachung des Hinweises auf die Patenterteilung: **26.08.2026**
(21) Anmeldenummer: 23198693.6
(22) Anmeldetag: 21.09.2023
(51) Int. Cl.: G01S 7/497, G01S 17/42, G01S 17/931

(54) **OPTISCHER SENSOR**
OPTICAL SENSOR
CAPTEUR OPTIQUE

(43) Veröffentlichungstag der Anmeldung: 26.03.2025
(73) Patentinhaber: Leuze electronic GmbH + Co KG, 73277 Owen/Teck (DE)
(72) Erfinder: Wursthorn, Viktor, 72636 Frickenhausen (DE); Wendel, Simon, 73230 Kirchheim unter Teck (DE)
(74) Vertreter: Ruckh, Rainer Gerhard

(56) Entgegenhaltungen:
- EP-A1- 3 367 135
- EP-A1- 4 086 661
- EP-A2- 1 302 784

## Beschreibung

Die Erfindung betrifft einen optischen Sensor und ein Verfahren zur Erfassung von Objekten in einem Überwachungsbereich mittels eines optischen Sensors.

Derartige optische Sensoren werden generell zu Überwachungszwecken eingesetzt. Insbesondere ist der optische Sensor als Sicherheitssensor ausgebildet, der in sicherheitstechnischen Applikationen eingesetzt wird.

Der optische Sensor umfasst ein eine Frontscheibe aufweisendes Gehäuse, in welchem wenigstens ein Lichtstrahlen emittierender Sender und wenigstens ein Lichtstrahlen empfangender Empfänger vorhanden sind, wobei vom Sender emittierte Lichtstrahlen durch die Frontscheibe in den Überwachungsbereich geführt sind und von einem Objekt reflektierte Lichtstrahlen über die Frontscheibe zum Empfänger geführt sind. Weiterhin umfasst der optische Sensor eine Auswerteeinheit, in welcher in Abhängigkeit von Empfangssignalen des Empfängers ein Objektfeststellungssignal generiert wird, das über einem Ausgang ausgegeben wird.

Ein Beispiel für einen derartigen optischen Sensor ist ein Flächendistanzsensor, d.h. ein scannender Distanzsensor.

In diesem Fall ist im Gehäuse des Flächendistanzsensors zusätzlich eine Ablenkeinheit vorhanden, mit der die Lichtstrahlen in einer Scanrichtung periodisch innerhalb eines bestimmten Winkelbereichs geführt sind.

Bei optischen Sensoren, die in sicherheitsrelevanten, insbesondere sicherheitstechnischen Applikationen im Bereich des Personenschutzes eingesetzt werden, müssen erhöhte Anforderungen an die Detektionssicherheit erfüllt sein.

Die normativen Anforderungen für die Detektionssicherheit schreiben vor, dass in einer maximalen Reichweite des optischen Sensors ein diffus reflektierendes Objekt mit einer Remission von 1,8 % in dieser maximalen Reichweite noch mit einer definierten Detektionssicherheit bei regulären Betriebsbedingungen, d.h. unter Berücksichtigung von Umweltbedingungen, Alterung von Bauteilen und externen Störeinflüssen, erkannt wird.

Dabei wird der Umstand berücksichtigt, dass zu größeren Objektdistanzen hin der Pegel der Empfangssignale des Empfängers bei der Objektdistanz umgekehrt proportional zum Quadrat der Entfernung abnimmt. Je geringer der Pegel des Empfangssignals desto geringer ist die erzielbare Detektionssicherheit.

Durch Verschmutzungen der Frontscheibe, die während des Betriebs des optischen Sensors auftreten, wird der Pegel der Empfangssignale bei Objektdetektionen reduziert, was zu einer Reduzierung der Detektionssicherheit führt.

Bekannterweise werden bei optischen Sensoren optische Fensterüberwachungseinheiten eingesetzt, um den Grad der Verschmutzung der Frontscheibe zu detektieren. Beispielsweise umfasst die Fensterüberwachungseinheit einen Kontrollsensor mit einem Kontrolllichtstrahlen emittierenden Kontrollsender und einem Kontrolllichtstrahlen empfangenden Kontrollempfänger, mit dem die Transmission der die Frontscheibe durchsetzenden Kontrolllichtstrahlen gemessen wird.

Der Pegel der Empfangssignale am Kontrollempfänger ist mit dem Pegel der Empfangssignale korreliert. Je geringer der Pegel der Empfangssignale des Kontrollempfängers, desto größer ist die Verschmutzung der Frontscheibe und desto kleiner ist der Pegel der Empfangssignale des Empfängers. Bei solchen Fensterüberwachungseinheiten bestimmt ein Grenzwert ein Unterschreiten eines minimalen Pegels das Abschalten.

Alternativ gibt es Fensterüberwachungseinheiten, die die Verschmutzung der Frontscheibe bewerten, indem das von einer Verschmutzung gesteuerte Licht gemessen wird. In solchen Systemen nimmt der Pegel der Empfangssignale des Kontrollempfängers zu, je höher die Verschmutzung der Fensterhaube ist. Bei solchen Fensterüberwachungseinheiten ist ein Grenzwert ein maximaler Pegel, bei dessen Überschreiten ein Abschalten auslöst.

Um Fehldetektionen des optischen Sensors aufgrund von Verschmutzungen zu vermeiden, wird der optische Sensor auf eine maximale Reichweite ausgelegt, bei welcher noch ein definierter Pegel der Empfangssignale des Empfängers vorhanden ist, der eine bestimmte Detektionssicherheit gewährleistet. Für diese maximale Reichweite wird ein Grenzwert der Pegel der Empfangssignale des Kontrollempfängers definiert und in der Auswerteeinheit vorgegeben. Dieser Grenzwert definiert die maximal zulässige Verschmutzung der Frontscheibe. Wird durch Verschmutzungen der Frontscheibe im Betrieb des optischen Sensors der Grenzwert erreicht, geht der optische Sensor in einen sicheren Zustand über. Beispielsweise werden die sicheren Schaltausgänge des optischen Sensors abgeschaltet.

Damit werden zwar die normativen Anforderungen betreffend die Detektionssicherheit des optischen Sensors erfüllt. Nachteilig hierbei ist jedoch, dass die Verfügbarkeit des optischen Sensors dadurch eingeschränkt ist. Die Empfindlichkeit des Sensors gegenüber Verschmutzungen ist immer gleich und in vielen Fällen höher als nötig.

In zahlreichen Applikationen des optischen Sensors ist es nicht erforderlich Objektdetektionen bis zur maximal möglichen Reichweite des optischen Sensors durchzuführen. Vielmehr ist es oft ausreichend, Objektüberwachungen in kleineren Distanzbereichen durchzuführen. Ein Beispiel hierfür ist eine Schutzfeldüberwachung die mit einem Flächendistanzsensor durchgeführt wird. Der Rand des Schutzfelds, innerhalb dessen Objektüberwachungen durchgeführt werden, liegt typischerweise bei kleineren Distanzen als die maximale Reichweite des optischen Sensors.

Grenzwert für die Verschmutzung ist auf die maximale Reichweite des optischen Sensors ausgelegt, weshalb der optische Sensor bei auftretenden Verschmutzungen bereits dann in den sicheren Zustand übergeht, wenn innerhalb des Schutzfelds noch eine sichere Objektdetektion möglich wäre.

Die EP 1 302 784 A2 betrifft ein Verfahren zum Bestimmen der Sichtweite einer bevorzugt optoelektronischen, insbesondere an einem Fahrzeug angebrachten Erfassungseinrichtung, insbesondere eines Laserscanners, die zumindest einen Sensor zur Aussendung von insbesondere gepulster elektromagnetischer Strahlung in einen Überwachungsbereich und zum Empfang von aus dem Überwachungsbereich reflektierter Strahlung sowie eine Auswerteeinrichtung zur Auswertung der reflektierten Strahlung umfasst, bei dem während des Betriebs des Sensors das Vorliegen wenigstens einer im Sichtbereich des Sensors liegenden, die Sichtweite zumindest bereichsweise beeinträchtigenden Störung anhand wenigstens einer charakteristischen Störungseigenschaft erkannt wird, die mittels des Sensors durch Auswerten der reflektierten Strahlung identifizierbar ist, aus reflektierter Strahlung, die zumindest die aus dem Störbereich stammende Störstrahlung umfasst, die Stärke der Störung ermittelt wird, und aus der Störungsstärke die momentane Sichtweite des Sensors bestimmt wird.

Die EP 3 367 135 A1 betrifft einen optischen Sensor zur Erfassung von Objekten in einem Überwachungsbereich mit einem Gehäuse und einer innerhalb des Gehäuses angeordneten Sende-/ Empfangseinheit, wobei von einem Sender der Sende-/ Empfangseinheit emittierte Lichtstrahlen periodisch innerhalb des Überwachungsbereichs geführt sind und dabei eine Scheibe durchsetzen. Von einem Objekt zurückreflektierte Lichtstrahlen sind durch die Scheibe zu einem Empfänger der Sende-/ Empfangseinheit geführt. In einer Auswerteeinheit werden Empfangssignale des Empfängers zur Generierung eines Objektfeststellungsignals ausgewertet. Zur Überprüfung der Durchlässigkeit der Scheibe ist eine Testeinheit vorgesehen. Die Testeinheit weist mehrere stationär im Gehäuse angeordnete Testsender auf, deren Testlichtstrahlen auf unterschiedliche Bereiche der Scheibe ausgerichtet sind. Die Testeinheit weist eine außerhalb des Gehäuses angeordnete Reflektoreinheit auf, auf welche die Testlichtstrahlen der Testsender ausgerichtet sind. Jedem Testsender ist in einer Detektionsposition ein Testdetektor als weiterer Bestandteil der Testeinheit so zugeordnet, dass die von diesem Testsender emittierten Testlichtstrahlen die Scheibe durchsetzen auf die Reflektoreinheit treffen und von dort durch die Scheibe zum Testdetektor geführt sind. Mit dem Testdetektor oder einem weiteren Testdetektor wird eine Referenzmessung durchgeführt, wobei hierzu die von einem Testsender emittierten Testlichtstrahlen über eine Referenzstrecke zu diesem Testdetektor geführt sind.

In der EP 4 086 661 A1 wird ein optoelektronischer Sensor angegeben, der einen Lichtsender, eine bewegliche Ablenkeinheit, einen Lichtempfänger, eine Frontscheibe, einen mit der Ablenkeinheit mitbewegten Testlichtsender und Testlichtempfänger und eine Steuer- und Auswertungseinheit aufweist, die dafür ausgebildet ist, Informationen über die Objekte in dem Überwachungsbereich zu gewinnen sowie in einer Frontscheibenüberwachungsmessung eine beeinträchtigte Lichtdurchlässigkeit der Frontscheibe aus einem Testlichtsignal des Testlichtempfänger zu erkennen sowie eine Referenzmessung des Testlichtsignals in mindestens einer Referenzstellung der Ablenkeinheit durchzuführen.

Der Erfindung liegt die Aufgabe zugrunde, einen optischen Sensor der eingangs genannten Art bereitzustellen, der eine hohe Funktionssicherheit und zugleich eine hohe Verfügbarkeit aufweist.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft einen optischen Sensor zur Erfassung von Objekten in einem Überwachungsbereich mit einem eine Frontscheibe aufweisenden Gehäuse, in welchem wenigstens ein Lichtstrahlen emittierender Sender und wenigstens ein Lichtstrahlen empfangender Empfänger vorhanden sind. Vom Sender emittierte Lichtstrahlen werden durch die Frontscheibe in den Überwachungsbereich geführt. Von einem Objekt reflektierte Lichtstrahlen werden über die Frontscheibe zum Empfänger geführt. Der optische Sensor weist weiter eine Auswerteeinheit auf, in welcher in Abhängigkeit von Empfangssignalen des Empfängers ein Objektfeststellungssignal generiert wird, das über einen Ausgang ausgegeben wird. Es ist eine optische Fensterüberwachungseinheit vorhanden, mittels derer Verschmutzungen der Frontscheibe detektiert werden. Der optische Sensor geht selbsttätig in einen sicheren Zustand über, wenn mit der Fensterüberwachungseinheit ein Grenzwert des Verschmutzungsgrads der

Frontscheibe detektiert wird, wobei der Grenzwert abhängig von einer applikationsspezifischen Maximaldetektionsdistanz vorgegeben ist.

Die Erfindung betrifft auch ein entsprechendes Verfahren.

Der erfindungsgemäße optische Sensor ist für den Einsatz in sicherheitsrelevanten Applikationen ausgebildet und erfüllt hierzu die normativen Anforderungen an die Detektionssicherheit bei durchzuführenden Objektdetektionen. Dabei ist gewährleistet, dass bei allen durchzuführenden Objektdetektionen ein diffus reflektierendes Objekt mit einer Remission von 1,8 % mit der normativ geforderten Detektionssicherheit erkannt wird.

Besonders vorteilhaft ist der optische Sensor ein Sicherheitssensor. Der Sicherheitssensor weist einen fehlersicheren Aufbau auf. Dies kann durch eine redundante, insbesondere mehrkanalige Ausführung der Auswerteeinheit und des Ausgangs des optischen Sensors realisiert werden.

Mit dem optischen Sensor kann insbesondere der Betrieb einer Anlage, von der Gefahren für Personen ausgehen können, gesteuert werden. Der optische Sensor überwacht dann einen bestimmten Distanzbereich im Umfeld der Anlage. Abhängig davon, ob ein Objekt im Distanzbereich detektiert wird oder nicht, wird in der Auswerteeinheit als Objektfeststellungssignal ein binäres Schaltsignal generiert, das über den sicheren Ausgang an die Anlage ausgegeben wird. Wird ein Objekt im Distanzbereich detektiert, wird als Schaltsignal ein Abschaltbefehl generiert, mit dem die Anlage abgeschaltet wird, so dass von dieser keine Gefahren mehr ausgehen können.

Der erfindungsgemäße optische Sensor kann beispielsweise in Form eines Distanzsensors oder Kamerasensors ausgebildet sein.

Gemäß einer vorteilhaften Ausgestaltung ist der optische Sensor ein Flächendistanzsensor, wobei mit diesem eine Schutzfeldüberwachung innerhalb eines Schutzfelds durchgeführt wird.

Vorteilhaft sind im Flächendistanzsensor unterschiedliche Schutzfelder aktivierbar.

Bei einem solchen Flächendistanzsensor ist die Maximaldetektionsdistanz von einem Rand eines Schutzfelds gebildet

Bei dem erfindungsgemäßen optischen Sensor ist eine optische Fensterüberwachungseinheit vorhanden, mittels derer Verschmutzungen der Frontscheibe detektiert werden. Erfindungsgemäß geht der optische Sensor selbsttätig in einen sicheren Zustand über, wenn mit der Fensterüberwachungseinheit ein Grenzwert des Verschmutzungsgrads der Frontscheibe detektiert wird, wobei der Grenzwert abhängig von einer applikationsspezifischen Maximaldetektionsdistanz vorgegeben ist.

Mit der optischen Fensterüberwachungseinheit werden die Detektionssicherheit des optischen Sensors beeinträchtigende Verschmutzungen erfasst. Erfindungsgemäß ist der Grenzwert der zulässigen Verschmutzung nicht auf die maximale Reichweite des optischen Sensors sondern die in der jeweiligen Applikation benötigte Maximaldetektionsdistanz bezogen, die typischerweise kleiner ist als die maximale Reichweite. Dabei wird die in der Auswerteeinheit vorgegebene Maximaldetektionsdistanz für die jeweilige Applikation spezifisch vorgegeben und in der Auswerteeinheit abgespeichert.

Ein auf die maximale Reichweite bezogener Grenzwert würde zu einem unnötigen Übergang in den sicheren Zustand des optischen Sensors führen, wenn mit diesem nur Objektdetektionen innerhalb einer Maximaldetektionsdistanz durchgeführt werden, die kleiner ist als die maximale Reichweite.

Durch den auf die Maximaldetektionsdistanz bezogenen Grenzwert sind die normativen Anforderungen an die Detektionssicherheit stets erfüllt, da Objektdetektionen bei Distanzen größer als die Maximaldetektionsdistanz, bei denen die Detektionssicherheit bei Verschmutzungen nicht mehr gegeben ist, ausgeschlossen sind. Umgekehrt ist durch den auf die Maximaldetektionsdistanz bezogenen Grenzwert gewährleistet, dass im Betrieb des optischen Sensors bei allen Objektdetektionen innerhalb der Maximaldetektionsdistanz die geforderte Detektionssicherheit gegeben ist, da ansonsten der optische Sensor sofort in den sicheren Zustand übergehen würde.

Damit ist für den erfindungsgemäßen optischen Sensor nicht nur eine hohe Funktionssicherheit gewährleistet, vielmehr weist dieser auch eine hohe Verfügbarkeit auf.

Durch den variablen, an die jeweilige Applikation angepassten Grenzwert für die Fensterüberwachungseinheit wird ein unnötiger Übergang des optischen Sensors in den sicheren Zustand vermieden, wodurch unnötige Stillstandszeiten des optischen Sensors oder einer mit dem optischen Sensor überwachten Anlage vermieden werden.

Vorteilhaft ist der sichere Zustand durch Abschalten des sicheren Ausgangs oder durch Ausgabe eines Abschaltbefehls am Ausgang realisiert.

Mit der Generierung eines Abschaltbefehls wird insbesondere eine mit dem optischen Sensor überwachte Anlage stillgesetzt, so dass von dieser keine Gefahren mehr ausgehen können.

Gemäß einer vorteilhaften Ausführungsform weist die Fensterüberwachungseinheit wenigstens einen Kontrollsensor mit einem Kontrolllichtstrahlen emittierenden Kontrollsender und einem Kontrolllichtstrahlen empfangenden Kontrollempfänger auf.

Gemäß einer ersten Variante werden mit dem Kontrollempfänger die Frontscheibe durchsetzende Kontrolllichtstrahlen des Kontrollsenders registriert.

In diesem Fall werden durch Transmissionsmessungen Verschmutzungen der Frontscheibe erfasst.

Gemäß einer zweiten Variante werden mit dem Kontrollempfänger an der Frontscheibe reflektierte Kontrolllichtstrahlen des Kontrollsenders registriert.

In diesem Fall werden durch Reflexionsmessungen Verschmutzungen der Frontscheibe erfasst.

Bei einem als Flächendistanzsensor ausgebildeten optischen Sensor werden die Lichtstrahlen des Senders in einer Scanrichtung periodisch innerhalb eines Winkelbereichs und dabei durch die Frontscheibe geführt. Vorteilhaft sind dann in Scanrichtung versetzt mehrere Kontrollsensoren stationär angeordnet. Alternativ ist ein Kontrollsensor vorgesehen, dessen optische Anordnung eine Bewegung in Scanrichtung ermöglicht d.h. der Kontrollsensor ist rotierend angeordnet. Der Kontrollsensor kann auch aus einer feststehenden und einer rotierenden Sende- und Empfangseinrichtung bestehen.

Durch die in Scanrichtung in Abstand zueinander angeordneten Kontrollsensoren kann ein großer Teil der Frontscheibe auf Verschmutzungen überwacht werden.

Bei einem derartigen Flächendistanzsensor erfolgt typisch eine Objektüberwachung innerhalb eines Schutzfelds. Dabei definiert der Schutzfeldrand die Maximaldetektionsdistanz.

Je nach Geometrie des Schutzfelds ist in unterschiedlichen Winkelstellungen der Lichtstrahlen der Schutzfeldrand unterschiedlich weit vom optischen Sensor entfernt. Ein einfaches Beispiel hierfür ist ein rechteckiges Schutzfeld.

In diesem Fall ist es zweckmäßig den Schutzfeldrand winkelaufgelöst als Maximaldetektionsdistanzfeld in der Auswerteeinheit zu hinterlegen.

Daran angepasst ist für jeden Kontrollsensor ein Grenzwert für den Verschmutzungsgrad abhängig von einer Maximaldetektionsdistanz vorgegeben, bzw. es werden bei einem mitrotierenden Kontrollsensor winkelbereichsabhängige Verschmutzungsgrade vorgegeben.

Dabei ist jeder Kontrollsensor einem Winkelsegment des Winkelbereichs zugeordnet, und der Grenzwert ist abhängig vom Rand des Schutzfelds in diesem Winkelsegment definiert.

Die Maximaldetektionsdistanz ist somit vom Abstand des Schutzfeldrands zum optischen Sensor in dem jeweiligen Winkelsegment, in welchem der Kontrollsensor die Verschmutzungen detektiert, gebildet.

Gemäß einer vorteilhaften Ausführungsform kann die Maximaldetektionsdistanz in einem optimierten Entfernungsbereich variiert werden, in welchem die Pegel der Empfangssignale des Empfängers bei Objektdetektionen eine mit dem Abstand zum optischen Sensor streng monoton fallende Funktion bilden.

Ein monoton fallender Verlauf der Pegel der Empfangssignale abhängig von der Objektdistanz ist eine Voraussetzung für eine eindeutige Zuordnung von Grenzwerten der Verschmutzungsüberwachung zur Maximaldetektionsdistanz. Vorteilhaft wird der Bereich, in welchem der Pegel der Empfangssignale streng monoton mit der Objektdistanz abnimmt, durch geeignete konstruktive Maßnahmen wie z.B. optischen Elementen wie Linsen, maximiert.

Die Erfindung wird im Folgenden anhand der Zeichnungen erläutert. Es zeigen:
- Figur 1:: Erstes Ausführungsbeispiel des erfindungsgemäßen optischen Sensors.
- Figur 2:: Draufsicht auf den optischen Sensor gemäß Figur 1 bei einer Schutzfeldüberwachung
- Figur 3:: Zweites Ausführungsbeispiel des erfindungsgemäßen optischen Sensors.
- Figur 4:: Distanzabhängiger Verlauf der Pegel der Empfangssignale des Empfängers des optischen Sensors.

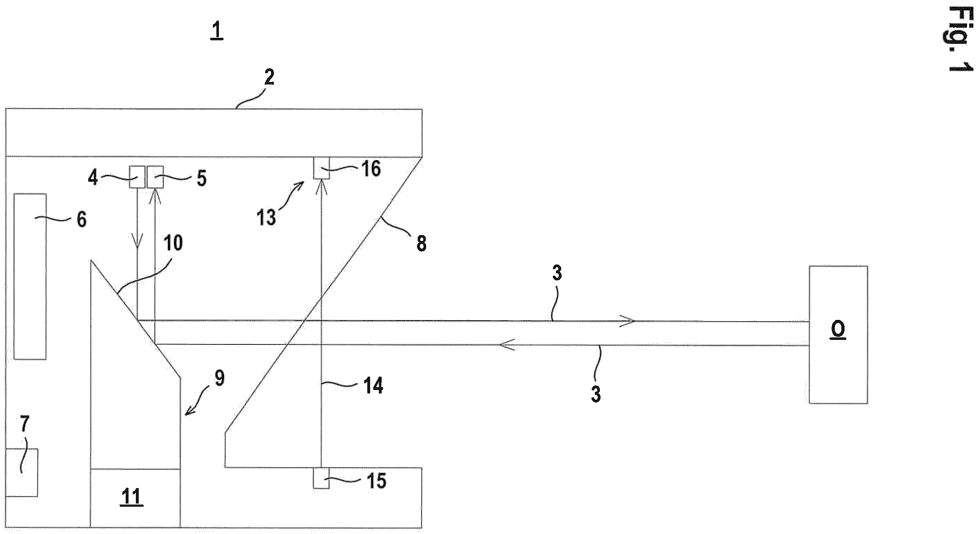

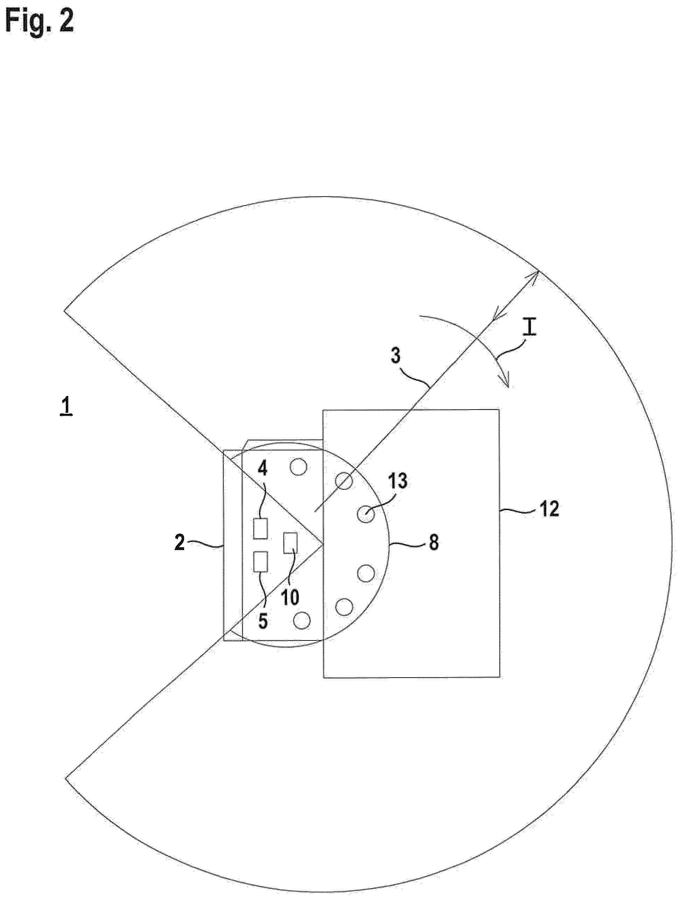

Die Figuren 1 und 2 zeigen ein Ausführungsbeispiel des erfindungsgemäßen optischen Sensors 1.

Der optische Sensor 1 dient zur Objektüberwachung in einem Überwachungsbereich. Die Sensorkomponenten des optischen Sensors 1 sind in einem Gehäuse 2 untergebracht.

Der optische Sensor 1 kann beispielsweise in Form eines Kamerasensors oder in Form eines 1D-Distanzsensors ausgebildet sein.

Im vorliegenden Fall ist der optische Sensor 1 als Flächendistanzsensor ausgebildet.

Der Flächendistanzsensor weist einen Lichtstrahlen 3 emittierenden Sender 4 und einen Lichtstrahlen 3 empfangenden Empfänger 5 auf, die einen Distanzsensor bilden.

Mit dem Distanzsensor werden Distanzmessungen nach einem Impuls-LaufzeitVerfahren durchgeführt. Hierzu emittiert der Sender 4 Lichtstrahlen 3 in Form von Lichtimpulsen. Dann wird das Maß für die Distanz eines Objekts O zum optischen Sensor 1 die Laufzeit der Lichtimpulse zu dem Objekt O und zurück zum optischen Sensor 1 erfasst und in der Auswerteeinheit 6 ausgewertet.

Alternativ kann die Distanzmessung nach dem Phasenmessprinzip erfolgen.

Im Gehäuse 2 ist eine Auswerteeinheit 6 zur Auswertung von Empfangssignalen des Empfängers 5 angeordnet. Der optische Sensor 1 ist als Sicherheitssensor ausgebildet. Zur Erfüllung der normalen Sicherheitsanforderungen weist die Auswerteeinheit 6 einen redundanten Aufbau auf, beispielsweise in Form zweier sich zyklisch gegenseitig überwachenden Rechnereinheiten.

In der Auswerteeinheit 6 wird abhängig von den Empfangssignalen des Empfängers 5 ein Objektfeststellungssignal generiert, das über einen Ausgang 7 ausgegeben wird, beispielsweise an eine mit dem optischen Sensor 1 überwachte Anlage. Auch der Ausgang 7 weist einen fehlersicheren, beispielsweise redundanten Aufbau auf.

Im Gehäuse 2 ist eine transparente Frontscheibe 8 integriert, durch welche die Lichtstrahlen 3 geführt sind.

Die Lichtstrahlen 3 des Senders 4 durchsetzen die Frontscheibe 8 und werden periodisch in einer Scanrichtung (Pfeil I in Figur 2) innerhalb eines Winkelbereichs geführt, der im vorliegenden Fall durch die Ausdehnung der Frontscheibe 8 in Scanrichtung begrenzt ist. Der Winkelbereich beträgt etwa 275°, wie aus Figur 2 ersichtlich. Von einem Objekt O reflektierte Lichtstrahlen 3 werden durch die Frontscheibe 8 zurück zum Empfänger geführt.

Die Ablenkung der Lichtstrahlen 3 erfolgt mittels einer Ablenkeinheit 9, die einen Umlenkspiegel 10 zur Umlenkung der Lichtstrahlen 3 aufweist. Der Umlenkspiegel 10 wird mittels einer elektrischen Antriebseinheit 11 in Drehbewegung versetzt. Die Drehung erfolgt um eine Drehachse D.

Mit dem optischen Sensor 1 erfolgt eine Schutzfeldüberwachung. Wie aus Figur 2 ersichtlich wird hierzu im optischen Sensor 1, vorzugsweise durch eine Auswahl von mehreren gespeicherten Schutzfeldern 12, ein Schutzfeld 12 aktiviert.

Bei der Schutzfeldüberwachung wird als Objektfeststellungssignal ein binäres Schaltsignal generiert, dessen Schaltzustände angeben, ob sich ein Objekt O im Schutzfeld 12 befindet oder nicht. Befindet sich ein Objekt O im Schutzfeld 12, wird als Schaltsignal ein Abschaltbefehl generiert, mit dem eine mit dem optischen Sensor 1 überwachte Anlage stillgesetzt wird.

Zur Erfassung und Kontrolle von Verschmutzungen ist eine optische Fensterüberwachungseinheit vorgesehen. Die Fensterüberwachungseinheit umfasst wenigstens einen Kontrollsensor 13, mittels dessen Verschmutzungen der Frontscheibe 8 erfasst werden können. Im vorliegenden Fall sind mehrere Kontrollsensoren 13 vorhanden, die in Scanrichtung in Abstand hintereinander im Bereich der Frontscheibe 8 angeordnet sind.

Jeder Kontrollsensor 13 umfasst einen Kontrolllichtstrahlen 14 emittierenden Kontrollsender 15 und einen Kontrolllichtstrahlen 14 empfangenden Kontrollempfänger 16.

Jeder Kontrollsensor 13 des optischen Sensors 1 gemäß Figur 1 arbeitet nach dem Transmissionsprinzip. Ein solches System nach dem Transmissionsprinzip kann alternativ auch umgesetzt werden, indem der Kontrollsender 15 und Kontrollsensor 16 nebeneinander im oberen oder unteren Teil des Gebäudes 2 angeordnet sind und die Kontrolllichtstrahlen über einen gegenüberliegend angeordneten Spiegel oder Reflektor geführt werden und dann die Frontscheibe 14 zweimal durchsetzen.

Im dargestellten Fall durchsetzen die Kontrolllichtstrahlen 14 des Kontrollsenders 15 der Frontscheibe 8 einmal und werden dann zum Kontrollempfänger 16 geführt. Der Pegel der Empfangssignale des Kontrollempfängers 16 ist um so kleiner je größer die Verschmutzung der Frontscheibe 8 ist.

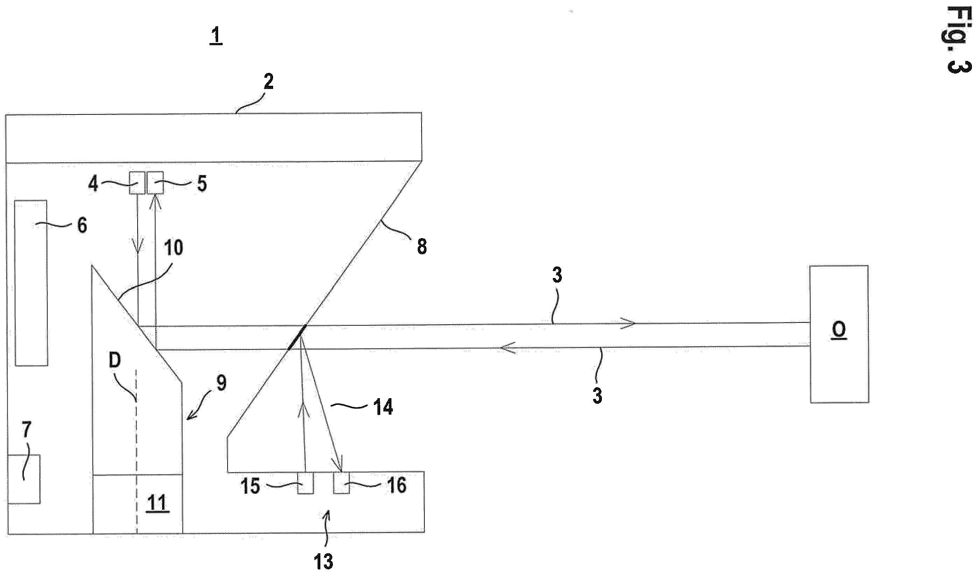

Figur 3 zeigt eine Variante des optischen Sensors 1. Die Ausführungsform der Figur 3 unterscheidet sich von der Ausführungsform gemäß Figur 1 nur hinsichtlich der Ausbildung der Kontrollsensoren 13.

Jeder Kontrollsensor 13 gemäß Figur 3 arbeitet nach dem Reflexionsprinzip.

In diesem Fall werden die vom Kontrollsender 15 emittierten Kontrolllichtstrahlen 14 je nach Verschmutzungsgrad an der Frontscheibe 8 teilweise reflektiert und zum Kontrollempfänger 16 geführt. Der Pegel der Empfangssignale der Kontrollempfänger 16 ist umso größer je größer die Verschmutzung der Frontscheibe 8 ist. Der Kontrollsender 15 und Kontrollempfänger 16 können sich alternativ auch innerhalb des geschlossenen Bereichs des Geräts befinden, dann verläuft der Weg der Kontrolllichtstrahlen 14 innerhalb des Geräts

Erfindungsgemäß wird für beide Ausführungsformen der Fensterüberwachungseinheit für die Kontrollsensoren 13 ein Grenzwert der Verschmutzung definiert. Ist der Grenzwert der Verschmutzung bei wenigstens einem der Kontrollsensoren 13 erreicht, ist keine sichere Objektdetektion mehr gewährleistet und der optische Sensor 1 wird selbststätig in einen sicheren Zustand überführt.

Vorteilhaft ist der sichere Zustand durch Abschalten des Ausgangs 7 oder durch Ausgabe eines Abschaltbefehls am Ausgang 7 realisiert.

Erfindungsgemäß wird der Grenzwert der Verschmutzung angepasst an die Anforderungen an die Detektionssicherheit vorgegeben.

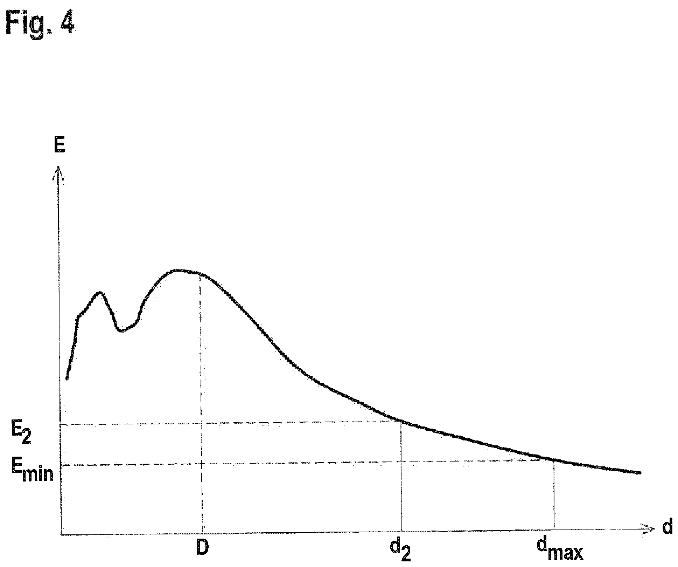

Dies ist in Figur 4 für den optischen Sensor 1 gemäß Figur 1 veranschaulicht. Figur 4 zeigt den Verlauf des Empfangspegels E, d.h. des Pegels der Empfangssignale des Empfängers 5 des optischen Sensors 1 abhängig von der Objektdistanz, wenn ein Objekt O mit einer definierten Remission von 1,8 % detektiert wird.

Die sicherheitstechnischen Normvorschriften schreiben vor, dass ein derartiges Objekt O mit einer Oberfläche mit einer Remission von 1,8 % mit einer definierten Detektionssicherheit erkannt werden muss, und zwar im gesamten Raumbereich, der mit dem optischen Sensor 1 überwacht wird.

Wie Figur 4 zeigt, nimmt der Empfangspegel E des Empfängers 5 in einem Fernbereich (bei Distanzen d > D) streng monoton mit der Objektdistanz ab. Die Größe dieses Bereichs wird vorzugsweise durch Einsatz geeigneter Optikelemente maximiert. Im Nahbereich bei Distanzen d < D ist in der Regel kein monotoner Verlauf des Empfangspegels E gegeben, verursacht durch angepasste optische Komponenten/Systeme die die Detektionsfähigkeit in kurzen Distanzen verbessern.

Es wird gefordert, dass der Sensor bei maximaler Reichweite dₘₐₓ (siehe Figur 4) ein Objekt noch sicher erkennt und zwar auch dann, wenn eine gewisse Verschmutzung der Frontscheibe 8 vorliegt. Das heißt, dass auch mit dieser Verschmutzung noch der minimale Pegel Eₘᵢₙ für eine sichere Detektion des Empfängers 5 erreicht wird.

Zu diesem Maß an erlaubter Verschmutzung gehört ein korrespondierender Pegel des Kontrollsystems des Fensterüberwachungssystems Eₘᵢₙ. Wenn die Verschmutzung weiter steigt, wird Eₘᵢₙ und damit eine sichere Detektion nicht mehr erreicht. Daher wird Eₘᵢₙ als Grenzwert des Fensterüberwachungssystem verwendet, bei dessen Unterschreiten der Sensor in einen sicheren Zustand übergeht, wodurch die Anlage stillgesetzt wird.

Wenn nach dem Stand der Technik dieser Grenzwert des Fensterüberwachungssystems verwendet wird, wird damit zwar die Sicherheitsanforderung bezüglich der Detektionssicherheit erfüllt, jedoch wird die Verfügbarkeit des optischen Sensors 1 gemäß den Figuren 1 und 2 unnötig eingeschränkt.

Um bei Gewährleistung der Detektionssicherheit die Verfügbarkeit des optischen Sensors 1 zu erhöhen, wird erfindungsgemäß der Grenzwert für die Verschmutzung Eₘᵢₙ, die mit dem oder den Kontrollsensoren 13 erfasst wird, nicht fest auf die maximale Reichweite des optischen Sensors 1, sondern auf die in der Applikation vorhandene Maximaldetektionsdistanz bezogen.

Bei dem optischen Sensor 1 gemäß den Figuren 1 und 2 ist die Maximaldetektionsdistanz durch den Rand des Schutzfelds 12 definiert. Bei dem dort beispielhaft gezeigten rechteckigen Schutzfeld ist die größte Distanz vom Sensor, für die die sichere Detektion gewährleistet sein muss, die Ecke des Schutzfeldes.

In Figur 4 ist diese größte, in dieser Applikation benötigte Distanz mit d₂ bezeichnet. Durch d₂<dₘₐₓ ist der Empfangspegel E₂ des Sensors 5 in dieser Distanz höher als Eₘᵢₙ. Damit gibt es eine zusätzliche Pegel-Reserve des Sensors in der Höhe (E₂-Eₘᵢₙ) für diese Applikation.

Erfindungsgemäß kann diese Reserve in dieser Applikation nun genutzt werden, um das Fensterüberwachungssystem robuster und weniger empfindlich zu machen. Das kann erreicht wird, indem das Fensterüberwachungssystem nicht bei dem oben beschriebenen Empfangspegel Eₘᵢₙ des Kontrollsystems bereits in einen sicheren Zustand übergeht, sondern erst bei einem niedrigeren (Kontrollsystem nach Transmissionsprinzip) Pegel E₂ (Es gilt E₂<Eₘᵢₙ) oder höherem Pegel (Kontrollsystem nach Reflektionsprinzip) E₂ (Es gilt E₂>Eₘᵢₙ). E₂ ist dabei der Empfangspegel des Kontrollsystems der einer größeren Verschmutzung entspricht, die grade die zusätzlich verfügbare Pegelreserve verbraucht. Der letztere Fall ist in Figur 4 dargestellt.

Durch den Bezug der Grenzwerte auf die durch die konkreten Schutzfelder gegebenen Maximaldetektionsdistanzen (anstelle der maximalen Reichweite) wird somit die Verfügbarkeit des optischen Sensors 1 erhöht und gleichzeitig die geforderte Detektionssicherheit sichergestellt. Diese Erhöhung der Verfügbarkeit äußert sich u.a. dadurch, dass eine Reinigung der Frontscheibe des Sensors seltener durchgeführt werden muss.

### Bezugszeichenliste

- (1): optischer Sensor
- (2): Gehäuse
- (3): Lichtstrahl
- (4): Sender
- (5): Empfänger
- (6): Auswerteeinheit
- (7): Ausgang
- (8): Frontscheibe
- (9): Ablenkeinheit
- (10): Umlenkspiegel
- (11): Antriebseinheit
- (12): Schutzfeld
- (13): Kontrollsensor
- (14): Kontrolllichtstrahl
- (15): Kontrollsender
- (16): Kontrollempfänger

- (D): Drehachse
- (E): Empfangspegel
- (O): Objekt

## Patentansprüche

1. Optischer Sensor (1) zur Erfassung von Objekten (O) in einem Überwachungsbereich mit einem eine Frontscheibe (8) aufweisenden Gehäuse (2), in welchem wenigstens ein Lichtstrahlen (3) emittierender Sender (4) und wenigstens ein Lichtstrahlen (3) empfangender Empfänger (5) vorhanden sind, wobei vom Sender (4) emittierte Lichtstrahlen (3) durch die Frontscheibe (8) in den Überwachungsbereich geführt sind und von einem Objekt (O) reflektierte Lichtstrahlen (3) über die Frontscheibe (8) zum Empfänger (5) geführt sind, und mit einer Auswerteeinheit (6) in welcher in Abhängigkeit von Empfangssignalen des Empfängers (5) ein Objektfeststellungssignal generiert wird, das über einen Ausgang (7) ausgegeben wird, und dass eine optische Fensterüberwachungseinheit vorhanden ist mittels derer Verschmutzungen der Frontscheibe (8) detektiert werden, **dadurch gekennzeichnet, dass** der optische Sensor (1) selbsttätig in einen sicheren Zustand übergeht, wenn mit der Fensterüberwachungseinheit ein Grenzwert des Verschmutzungsgrads der Frontscheibe (8) detektiert wird, wobei der Grenzwert abhängig von einer applikationsspezifischen Maximaldetektionsdistanz vorgegeben ist.

2. Optischer Sensor (1) nach Anspruch 1, **dadurch gekennzeichnet, dass** dieser ein Sicherheitssensor ist.

3. Optischer Sensor (1) nach einem der Ansprüche 1 oder 2, **dadurch gekennzeichnet, dass** der sichere Zustand durch Abschalten des Ausgangs (7) oder durch Ausgabe eines Abschaltbefehls am Ausgang (7) realisiert ist.

4. Optischer Sensor (1) nach einem der Ansprüche 1 bis 3, **dadurch gekennzeichnet, dass** dieser ein Flächendistanzsensor ist.

5. Optischer Sensor (1) nach Anspruch 4, **dadurch gekennzeichnet, dass** mit diesem eine Schutzfeldüberwachung innerhalb eines Schutzfelds (12) durchgeführt wird.

6. Optischer Sensor (1) nach Anspruch 5, **dadurch gekennzeichnet, dass** im Flächendistanzsensor unterschiedliche Schutzfelder (12) aktivierbar sind.

7. Optischer Sensor (1) nach einem der Ansprüche 5 oder 6, **dadurch gekennzeichnet, dass** die Maximaldetektionsdistanz von einem Rand eines Schutzfelds (12) gebildet ist.

8. Optischer Sensor (1) nach einem der Ansprüche 5 bis 7, **dadurch gekennzeichnet, dass** die Fensterüberwachungseinheit wenigstens einen Kontrollsensor (13) mit einem Kontrolllichtstrahlen (14) emittierenden Kontrollsender (15) und einem Kontrolllichtstrahlen (14) empfangenden Kontrollempfänger (16) aufweist.

9. Optischer Sensor (1) nach Anspruch 8, **dadurch gekennzeichnet, dass** mit dem Kontrollempfänger (16) die Frontscheibe (8) durchsetzende Kontrolllichtstrahlen (14) des Kontrollsenders (15) registriert werden.

10. Optischer Sensor (1) nach Anspruch 8, **dadurch gekennzeichnet, dass** mit dem Kontrollempfänger (16) an der Frontscheibe (8) reflektierte Kontrolllichtstrahlen (14) des Kontrollsenders (15) registriert werden.

11. Optischer Sensor (1) nach einem der Ansprüche 4 und 8, **dadurch gekennzeichnet, dass** die Lichtstrahlen (3) des Senders (4) in einer Scanrichtung periodisch innerhalb eines Winkelbereichs geführt sind und dabei durch die Frontscheibe (8) geführt sind, und dass in Scanrichtung versetzt mehrere Kontrollsensoren (13) angeordnet sind.

12. Optischer Sensor (1) nach Anspruch 11, **dadurch gekennzeichnet, dass** für jeden Kontrollsensor (13) ein Grenzwert abhängig von einer Maximaldetektionsdistanz vorgegeben ist.

13. Optischer Sensor (1) nach einem der Ansprüche 11 oder 12, **dadurch gekennzeichnet, dass** jeder Kontrollsensor (13) einem Winkelsegment des Winkelbereichs zugeordnet ist, und dass der Grenzwert abhängig vom Rand des Schutzfelds (12) in diesem Winkelsegment definiert ist.

14. Optischer Sensor (1) nach einem der Ansprüche 1 oder 12, **dadurch gekennzeichnet, dass** bei einem rotierenden Kontrollsensor (13) verschiedene Grenzwerte abhängig vom Winkelsegment und dem Rand des Schutzfelds (12) in diesen Winkelsegmenten definiert sind.

15. Optischer Sensor (1) nach einem der Ansprüche 1 bis 13, **dadurch gekennzeichnet, dass** die Maximaldetektionsdistanz in einem optimierten Entfernungsbereich variiert werden kann, in welchem die Pegel der Empfangssignale des Empfängers (5) bei Objektdetektionen eine mit dem Abstand zum optischen Sensor (1) streng monoton fallende Funktion bilden.

16. Verfahren zur Erfassung von Objekten (O) in einem Überwachungsbereich mittels eines optischen Sensors (1) mit einem eine Frontscheibe (8) aufweisenden Gehäuse (2), in welchem wenigstens ein Lichtstrahlen (3) emittierender Sender (4) und wenigstens ein Lichtstrahlen (3) empfangenden Empfänger (5) vorhanden sind, wobei vom Sender (4) emittierte Lichtstrahlen (3) durch die Frontscheibe (8) in den Überwachungsbereich geführt sind und von einem Objekt (O) reflektierte Lichtstrahlen (3) über die Frontscheibe (8) zum Empfänger (5) geführt sind, und mit einer Auswerteeinheit (6) in welcher in Abhängigkeit von Empfangssignalen des Empfängers (5) ein Objektfeststellungssignal generiert wird, das über einen Ausgang (7) ausgegeben wird, und dass eine optische Fensterüberwachungseinheit vorhanden ist mittels derer Verschmutzungen der Frontscheibe (8) detektiert werden, **dadurch gekennzeichnet, dass** der optische Sensor (1) selbsttätig in einen sicheren Zustand übergeht, wenn mit der Fensterüberwachungseinheit ein Grenzwert des Verschmutzungsgrads der Frontscheibe (8) detektiert wird, wobei der Grenzwert abhängig von einer applikationsspezifischen Maximaldetektionsdistanz vorgegeben ist.

## Claims

1. An optical sensor (1) for detecting objects (O) within a monitoring area, comprising a housing (2) having a front panel (8), in which there is at least one transmitter (4) emitting light beams (3) and at least one receiver (5) receiving light beams (3), wherein light beams (3) emitted by the transmitter (4) are guided through the front panel (8) into the monitoring area and light beams reflected by an object (O) (3) are guided via the front panel (8) to the receiver (5), and comprising an evaluation unit (6) in which, depending on the received signals from the receiver (5), an object detection signal is generated and output via an output (7), and in that an optical window monitoring unit is provided by means of which soiling of the front panel (8) is detected, **characterised in that** the optical sensor (1) automatically switches to a safe state when the front panel monitoring unit detects a threshold value for the degree of soiling of the front panel (8), the threshold value being predetermined as a function of an application-specific maximum detection distance.

2. An optical sensor (1) according to claim 1, **characterised in that** it is a safety sensor.

3. An optical sensor (1) according to one of claims 1 or 2, **characterised in that** the safe state is achieved by switching off the output (7) or by issuing a switch-off command at the output (7).

4. An optical sensor (1) according to any one of claims 1 to 3, **characterised in that** it is a surface distance sensor.

5. An optical sensor (1) according to claim 4, **characterised in that** it is used to monitor a safety field within a safety field (12).

6. An optical sensor (1) according to claim 5, **characterised in that** different protective fields (12) can be activated in the area distance sensor.

7. An optical sensor (1) according to any one of claims 5 or 6, **characterised in that** the maximum detection distance is defined by an edge of a protective field (12).

8. An optical sensor (1) according to any one of claims 5 to 7, **characterised in that** the window monitoring unit comprises at least one monitoring sensor (13) with a monitoring transmitter (15) emitting monitoring light beams (14) and a monitoring receiver (16) receiving monitoring light beams (14).

9. An optical sensor (1) according to claim 8, **characterised in that** the monitoring receiver (16) detects monitoring light beams (14) from the monitoring transmitter (15) passing through the front panel (8).

10. An optical sensor (1) according to claim 8, **characterised in that** the control receiver (16) detects control light beams (14) from the control transmitter (15) that are reflected off the front panel (8).

11. An optical sensor (1) according to one of claims 4 and 8, **characterised in that** the light beams (3) from the transmitter (4) are guided periodically within an angular range in a scanning direction and are thereby guided through the front panel (8), and **in that** a plurality of monitoring sensors (13) are arranged offset in the scanning direction.

12. An optical sensor (1) according to claim 11, **characterised in that** a threshold value dependent on a maximum detection distance is specified for each monitoring sensor (13).

13. An optical sensor (1) according to one of claims 11 or 12, **characterised in that** each monitoring sensor (13) is assigned to an angular segment of the angular range, and **in that** the threshold value is defined in this angular segment as a function of the edge of the protective field (12).

14. An optical sensor (1) according to one of claims 1 or 12, **characterised in that**, in the case of a rotating monitoring sensor (13), different threshold values are defined depending on the angular segment and the edge of the protective field (12) within these angular segments.

15. An optical sensor (1) according to any one of claims 1 to 13, **characterised in that** the maximum detection distance can be varied within an optimised distance range, in which the levels of the received signals at the receiver (5) during object detections form a function that decreases strictly monotonically with the distance to the optical sensor (1).

16. A method for detecting objects (O) in a monitoring area by means of an optical sensor (1) comprising a housing (2) having a front panel (8), in which there is at least one transmitter (4) emitting light beams (3) and at least one receiver (5) receiving light beams (3), wherein light beams (3) emitted by the transmitter (4) are guided through the front panel (8) into the monitoring area and light beams reflected by an object (O) (3) are guided via the front panel (8) to the receiver (5), and comprising an evaluation unit (6) in which, depending on the received signals from the receiver (5), an object detection signal is generated and output via an output (7), and in that an optical window monitoring unit is provided by means of which soiling of the front panel (8) is detected, **characterised in that** the optical sensor (1) automatically switches to a safe state when the window monitoring unit detects a threshold value for the degree of soiling of the front panel (8), the threshold value being predetermined depending on an application-specific maximum detection distance.

## Revendications

1. Capteur optique (1) destiné à détecter des objets (O) dans une zone de surveillance, comprenant un boîtier (2) muni d'un panneau avant (8), dans lequel se trouvent au moins un émetteur (4) émettant des faisceaux lumineux (3) et au moins un récepteur (5) recevant des faisceaux lumineux (3), dans lequel les faisceaux lumineux (3) émis par l'émetteur (4) sont guidés à travers le panneau avant (8) vers la zone de surveillance et les faisceaux lumineux (3) réfléchis par un objet (O) sont guidés via le panneau avant (8) vers le récepteur (5), et comprenant une unité d'évaluation (6) dans laquelle, en fonction des signaux reçus du récepteur (5), un signal de détection d'objet est généré et émis via une sortie (7), et en ce qu'une unité de surveillance du panneau avant est prévue, au moyen de laquelle l'encrassement du panneau avant (8) est détecté, **caractérisé en ce que** le capteur optique (1) bascule automatiquement vers un mode de sécurité lorsque l'unité de surveillance du panneau avant détecte une valeur seuil pour le degré d'encrassement du panneau avant (8), la valeur seuil étant prédéterminée en fonction d'une distance de détection maximale spécifique à l'application.

2. Capteur optique (1) selon la revendication 1, **caractérisé en ce qu'**il s'agit d'un capteur de sécurité.

3. Capteur optique (1) selon l'une des revendications 1 ou 2, **caractérisé en ce que** l'état de sécurité est obtenu par la désactivation de la sortie (7) ou par l'émission d'une commande de désactivation au niveau de la sortie (7).

4. Capteur optique (1) selon l'une quelconque des revendications 1 à 3, **caractérisé en ce qu'**il s'agit d'un capteur de distance de surface.

5. Capteur optique (1) selon la revendication 4, **caractérisé en ce qu'**il est utilisé pour surveiller un champ de sécurité à l'intérieur d'un champ de sécurité (12).

6. Capteur optique (1) selon la revendication 5, **caractérisé en ce que** différents champs de protection (12) peuvent être activés dans le capteur de distance de surface.

7. Capteur optique (1) selon l'une quelconque des revendications 5 ou 6, **caractérisé en ce que** la distance de détection maximale est définie par un bord d'un champ de protection (12).

8. Capteur optique (1) selon l'une quelconque des revendications 5 à 7, **caractérisé en ce que** l'unité de surveillance de panneau comprend au moins un capteur de surveillance (13) comportant un émetteur de surveillance (15) émettant des faisceaux lumineux de surveillance (14) et un récepteur de surveillance (16) recevant des faisceaux lumineux de surveillance (14).

9. Capteur optique (1) selon la revendication 8, **caractérisé en ce que** le récepteur de surveillance (16) détecte des faisceaux lumineux de surveillance (14) provenant de l'émetteur de surveillance (15) et traversant le panneau avant (8).

10. Capteur optique (1) selon la revendication 8, **caractérisé en ce que** le récepteur de contrôle (16) détecte des faisceaux lumineux de contrôle (14) provenant de l'émetteur de contrôle (15) qui sont réfléchis par le panneau avant (8).

11. Capteur optique (1) selon l'une des revendications 4 et 8, **caractérisé en ce que** les faisceaux lumineux (3) provenant de l'émetteur (4) sont guidés périodiquement dans une plage angulaire selon une direction de balayage et sont ainsi guidés à travers le panneau avant (8), et **en ce qu'**une pluralité de capteurs de surveillance (13) sont disposés de manière décalée dans la direction de balayage.

12. Capteur optique (1) selon la revendication 11, **caractérisé en ce qu'**une valeur seuil dépendant d'une distance de détection maximale est définie pour chaque capteur de surveillance (13).

13. Capteur optique (1) selon l'une des revendications 11 ou 12, **caractérisé en ce que** chaque capteur de surveillance (13) est associé à un segment angulaire de la plage angulaire, et **en ce que** la valeur seuil est définie dans ce segment angulaire en fonction du bord du champ de protection (12).

14. Capteur optique (1) selon l'une des revendications 1 ou 12, **caractérisé en ce que**, dans le cas d'un capteur de surveillance rotatif (13), différentes valeurs de seuil sont définies en fonction du segment angulaire et du bord du champ de protection (12) au sein de ces segments angulaires.

15. Capteur optique (1) selon l'une quelconque des revendications 1 à 13, **caractérisé en ce que** la distance de détection maximale peut être modifiée à l'intérieur d'une plage de distances optimisée, dans laquelle les niveaux des signaux reçus au niveau du récepteur (5) lors de détections d'objets forment une fonction qui diminue de manière strictement monotone avec la distance par rapport au capteur optique (1).

16. Procédé de détection d'objets (O) dans une zone de surveillance au moyen d'un capteur optique (1) comprenant un boîtier (2) muni d'un panneau avant (8), dans lequel se trouvent au moins un émetteur (4) émettant des faisceaux lumineux (3) et au moins un récepteur (5) recevant des faisceaux lumineux (3), dans lequel les faisceaux lumineux (3) émis par l'émetteur (4) sont guidés à travers le panneau avant (8) vers la zone de surveillance et les faisceaux lumineux (3) réfléchis par un objet (O) sont guidés via le panneau avant (8) vers le récepteur (5), et comprenant une unité d'évaluation (6) dans laquelle, en fonction des signaux reçus du récepteur (5), un signal de détection d'objet est généré et émis via une sortie (7), et en ce qu'une unité de surveillance optique du panneau est prévue, au moyen de laquelle l'encrassement du panneau avant (8) est détecté, **caractérisé en ce que** le capteur optique (1) bascule automatiquement vers un mode de sécurité lorsque l'unité de surveillance du panneau détecte une valeur seuil pour le degré d'encrassement du panneau avant (8), la valeur seuil étant prédéterminée en fonction d'une distance de détection maximale spécifique à l'application.
